(19) Europäisches Patentamt
European Patent Office
Office européen des brevets

(11) EP 2 290 646 A1

(12) EUROPEAN PATENT APPLICATION

(43) Date of publication:
02.03.2011 Bulletin 2011/09

(51) Int Cl.:
G11B 7/085 (2006.01)
G11B 7/08 (2006.01)
G11B 7/007 (2006.01)

(21) Application number: 09305757.8

(22) Date of filing: 14.08.2009

(84) Designated Contracting States:
AT BE BG CH CY CZ DE DK EE ES FI FR GB GR HR HU IE IS IT LI LT LU LV MC MK MT NL NO PL PT RO SE SI SK SM TR
Designated Extension States:
AL BA RS

(71) Applicant: Thomson Licensing
92130 Issy-les-Moulineaux (FR)

(72) Inventors:
• Malki, Oliver
78176 Fuetzen (DE)
• Przygodda, Frank
78050 Villingen-Schwenningen (DE)

(74) Representative: Schmidt-Uhlig, Thomas
Deutsche Thomson OHG
European Patent Operations
Karl-Wiechert-Allee 74
30625 Hannover (DE)

(54) Position calibration of a holographic storage medium

(57)   The present invention relates to a method for calibrating the position of a holographic storage medium (16) in the direction of an optical axis (A) in an apparatus (1) for reading from and/or writing to holographic storage media (16), and to an apparatus (1) for reading from and/or writing to holographic storage media (16), which makes use of such a method. According to the invention, for calibrating the position of the holographic storage medium (16) the following steps are performed:
- recording or locating (40) a test hologram in the holographic storage medium (16);
- determining (50) the dependency of the diffraction efficiency of the test hologram on a shift of a reference beam wavefront relative to the recorded hologram; and
- adjusting (60) the position of the holographic storage medium (16) responsive to the determined dependency.

Fig. 2

**Description**

The present invention relates to a method for calibrating the position of a holographic storage medium in the direction of an optical axis in an apparatus for reading from and/or writing to holographic storage media, and to an apparatus for reading from and/or writing to holographic storage media, which makes use of such a method.

In holographic data storage digital data are stored by recording the interference pattern produced by the superposition of two coherent laser beams, where one beam, the so-called 'object beam', is modulated by a spatial light modulator and carries the information to be recorded. The second beam serves as a reference beam. The interference pattern leads to modifications of specific properties of the storage material, which depend on the local intensity of the interference pattern. Reading of a recorded hologram is performed by illuminating the hologram with the reference beam using the same conditions as during recording. This results in the reconstruction of the recorded object beam.

One advantage of holographic data storage is an increased data capacity. Contrary to conventional optical storage media, the volume of the holographic storage medium is used for storing information, not just a few layers. One further advantage of holographic data storage is the possibility to store multiple data in the same volume, e.g. by changing the angle between the two beams or by using shift multiplexing, etc. Furthermore, instead of storing single bits, data are stored as data pages. Typically a data page consists of a matrix of light-dark-patterns, i.e. a two dimensional binary array or an array of grey values, which code multiple bits. This allows to achieve increased data rates in addition to the increased storage density. The data page is imprinted onto the object beam by the spatial light modulator (SLM) and detected with a detector array.

Typically the data pages are stored in or near the Fourier plane and thus the frequency components of the data page are stored in different locations of the hologram. Low frequency components are usually located near the center of the Fourier plane, whereas high frequency components are located more distant from the center of the Fourier plane. To avoid a distortion of the frequency spectrum of the data page the intensity distribution of the reference beam in the Fourier plane should be essentially homogeneous. Otherwise, the spectrum of the stored data pages is modulated by the intensity distribution of the reference beam. This distortion degrades the image quality of the retrieved data pages and ultimately leads to an increased bit error rate. Depending on the holographic setup the reference beam can be a plane wave or a focused beam. Setups with a focused reference beam often include a phase mask in order to flatten the intensity distribution of the reference beam and to ensure a good overlap of the object beam and the reference beam inside the holographic storage medium. An example of a holographic storage system with a phase mask is given in EP 2 028 653.

To achieve a maximum storage capacity for a holographic data storage system the system needs to be able to cope with weak signal to noise levels. This means that a relatively low diffraction efficiency of the hologram has to be sufficient to read out the hologram with suitable quality. The signal level obtained from the hologram needs to be significantly above the system noise level. Any tolerances in the system setup must, therefore, be reduced to a minimum by system design, or must be compensated by actuators during the writing and reading process.

As already stated above the read-out of a recorded hologram is performed by illuminating the hologram with the reference beam under identical conditions as during recoding. A misalignment of the reference beam leads to a weak reconstructed hologram or even inhibits the read-out of the hologram. The consequence is loss of data. To avoid this it has to be ensured that the wavefront of the reference beam has the same alignment relative to the holographic storage medium in terms of position and tilt as during recording. In holographic storage systems with exchangeable holographic storage media this is typically not the case. As a consequence, an actuator system is required. The actuator system adjusts the reference beam with respect to the hologram. Usually the objective lens for focusing the reference beam into the holographic storage system is mounted on an actuator system, which allows for positioning in two dimensions for focus and tracking control and tilting in one axis. Advanced actuators sometimes have even more degrees of freedom, e.g. to enable tilt adjustment in two axes. Such actuator systems are, however, complex and expensive.

In a co-pending patent application it is proposed to compensate tilt in both axes by shifting the phase mask for the reference beam, or more generally the phase pattern imprinted on the reference beam, in lateral direction perpendicular to the optical axis instead of tilting the objective lens. A brief explanation of this tilt compensation shall be given in the following. A focusing optic (lens or lens system) has two fundamental planes, the focal plane and the image plane. They are located at a focal length $f_l$ before and behind the lens or rather the principal planes of the lens system. In a holographic storage system with a focused reference beam the holographic storage medium is located in or near the focal plane. The phase mask is located in or near the image plane. There exists an important relation between the wavefronts at these two planes, which is called the Fourier shift theorem. If $f(x)$ has the Fourier transform $F(k)$, than $f(x-x_0)$ has the Fourier transform:

$$\int_{-\infty}^{\infty} f\left(x - x_0\right) e^{-2\pi ikx} dx \quad = \quad \int_{-\infty}^{\infty} f\left(x - x_0\right) e^{-2\pi ik(x - x_0)} e^{-2\pi ikx_0} d\left(x - x_0\right)$$

$$= \quad e^{-2\pi ikx_0} F\left(k\right).$$

This means that a shift in one domain leads to a linear phase change in the other domain. A linear phase change, however, describes a tilted wavefront. Therefore, a tilted wavefront in the focal plane is created by shifting the wavefront in the image plane. With other words, the movement of the phase mask in the image plane causes a tilt of the wavefront in the holographic material. This allows to adjust the wavefront with respect to a tilted holographic storage medium.

Apart from tilt one main alignment which needs to be guaranteed is the correct z-position of the holographic storage medium, i.e. the position of the holographic storage medium in the direction of the optical axis of the system. A misalignment of the holographic storage medium in z-direction leads to a reduction of the diffraction efficiency of the recorded hologram. Another effect of the z-misalignment is that the diffraction efficiency is less tolerant to a tilt of the holographic storage medium. This means that for a given tilt the diffraction efficiency is lower in case of a misalignment of the holographic storage medium in the z-direction.

It is an object of the present invention to propose a solution for correcting a position of a holographic storage medium in the direction of the optical axis in an apparatus for reading from and/or writing to holographic storage media.

According to the invention, this object is achieved by a method for calibrating the position of a holographic storage medium in the direction of an optical axis in an apparatus for reading from and/or writing to holographic storage media, which has the steps of:

- recording or locating a test hologram in the holographic storage medium;
- determining the dependency of the diffraction efficiency of the test hologram on a shift of a reference beam wavefront relative to the recorded hologram; and
- adjusting the position of the holographic storage medium responsive to the determined dependency.

According to a further aspect of the invention, this object is also achieved by an apparatus for reading from and/or writing to a holographic storage medium, with a reference beam for retrieving a hologram recorded in the holographic storage medium, which is adapted to perform the method according to the invention.

The present invention provides a solution for determining the correct z-position of a hologram in the holographic storage medium, i.e. the correct position of the holographic storage medium in the direction of the optical axis. The invention is based on the finding that the dependency of the diffraction efficiency of the test hologram on the shift of the reference beam wavefront relative to the recorded hologram is a function of the z-position of the holographic storage medium. Therefore, this dependency can be used to determine the correct z-position. The solution according to the invention has the advantage that it does not lead to any special requirements on the structure of the holographic storage medium. In addition, no additional sensors are needed.

Advantageously, the reference beam wavefront is shifted relative to the test hologram by laterally shifting the reference beam relative to an objective lens for focusing the reference beam into the holographic storage medium. Favorably, a dedicated actuator for laterally shifting the reference beam is provided for this purpose. By laterally shifting the reference beam the calibration scheme according to the invention is implemented in a simple and efficient manner.

Alternatively, the reference beam wavefront is shifted relative to the test hologram by laterally shifting a phase pattern imprinted on the reference beam. According to a first solution, the phase pattern is laterally shifted by moving a phase mask or a spatial light modulator for imprinting the phase pattern on the reference beam. For this purpose an actuator for laterally moving the phase mask or the spatial light modulator is advantageously provided. Preferably, the actuator includes one of a Piezo- or motor-driven translation stage and a voice coil actuator. According to a second solution, the phase pattern is laterally shifted by shifting a phase pattern on a spatial light modulator for imprinting the phase pattern on the reference beam. The phase pattern is controlled by a phase pattern controller. This solution has the advantage that no movable parts are necessary for calibration. It is especially useful for a coaxial holographic storage system, where a single spatial light modulator is used for generating both the object beam and the reference beam. As indicated above it has been proposed to use a shift of a phase pattern imprinted on the reference beam for tilt compensation. The proposed calibration solution allows to make use of the elements that are provided for tilt compensation for determining the correct z-position. Therefore, no additional actuators are needed.

Advantageously, the diffraction efficiency is determined by analyzing the strength of a reconstructed object beam on an array detector. An array detector is provided in any apparatus for reading from holographic storage media. As the strength of the reconstructed object beam is a direct measure of the diffraction efficiency of the recorded hologram, in this way the data necessary for calibration can be easily determined.

Favorably, an actuator is provided for adjusting the position of the holographic storage medium or the position of one or more objective lenses for focusing the reference beam and/or an object beam into the holographic storage medium. Both measures allow to easily adjust the z-position of the holographic storage medium.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims. In the figures:

Fig. 1    illustrates a counter-propagating holographic storage system according to the invention,

Fig. 2    shows a flow chart of a method according to the invention for adjusting the position of a holographic storage medium,

Fig. 3    depicts illumination of a hologram volume with a focused reference beam in case of a holographic storage medium without tilt,

Fig. 4    illustrates the situation of Fig. 3 after shifting the phase mask,

Fig. 5    depicts the dependency of the diffraction efficiency on the shift of the phase pattern for different offsets from the correct z-position,

Fig. 6    illustrates a translation vector of the wavefront in case of a correctly positioned holographic storage medium,

Fig. 7    depicts the translation vector of the wavefront in case of a holographic storage medium with small z-offset, and

Fig. 8    shows the translation vector of the wavefront in case of a holographic storage medium with large z-offset.

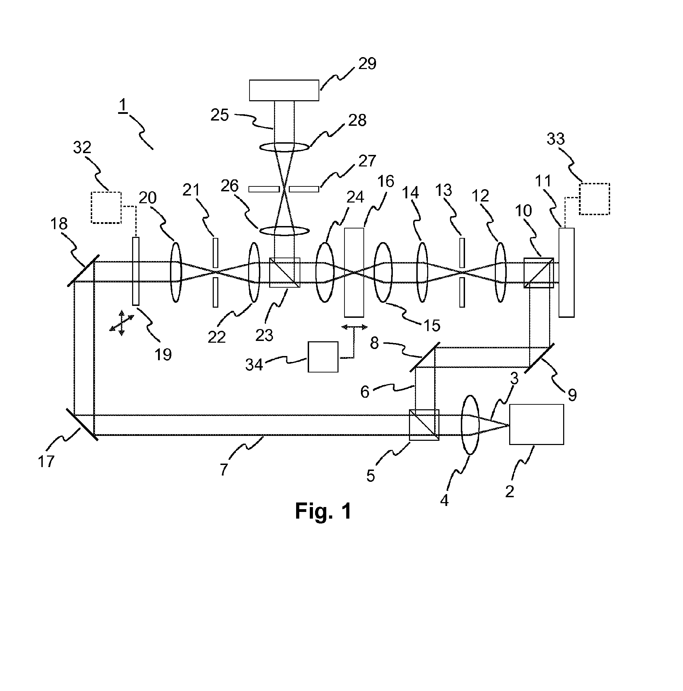

Fig. 1 illustrates a counter-propagating holographic storage system 1 according to the invention. A light source 2 emits a light beam 3, which is collimated by a collimating lens 4 and split by a first beam splitter 5 into an object beam 6 and a reference beam 7. For writing, the object beam 6 is directed via two mirrors 8, 9 and a second beam splitter 10 onto a reflective spatial light modulator 11, which imprints a data page, i.e. a data pattern, onto the object beam 6. The reflected object beam 6 passes through the second beam splitter 11 and a first spatial filter consisting of two lenses 12, 14 and a filter aperture 13 and is focused by a first objective lens 15 into a holographic storage layer of a holographic storage medium 16. The reference beam 7 is directed towards the holographic storage medium 16 by two mirrors 17, 18. Before being focused into the holographic storage layer of the holographic storage medium 16 by a second objective lens 24, the reference beam 7 passes through a movable phase mask 19 and a second spatial filter consisting of two lenses 20, 22 and a filter aperture 21. Due to the interference between the object beam 6 and the reference beam 7 a hologram is recorded in the holographic storage layer of the holographic storage medium 16. The position of the movable phase mask 19 is controlled with a movable mount (32) such as a Piezo or motor-driven x-y-translation stage or a voice coil actuator. Instead of a movable phase mask 19 an optical element with switchable phase cells can likewise be used, e.g. an optical element similar to a spatial light modulator. This optical element is fixed, but the phase cells are switched in such a way that the whole phase pattern is translated laterally. In this case a phase pattern controller 33 controls the switching of the phase cells. For correctly positioning the holographic storage medium in the direction of the optical axis an actuator 34 controls the position of the holographic storage medium 16 or the positions of both the first objective lens 15 and the second objective lens 24.

For reading a hologram located in the holographic storage layer of the holographic storage medium 16, the hologram is illuminated with the reference beam 7 only. The resulting reconstructed object beam 25 is collimated by the second objective lens 24 and directed onto an array detector 29, e.g. a CCD camera, by a third beam splitter 23. Before it impinges on the array detector 29, the reconstructed object beam 25 passes through a third spatial filter consisting of two lenses 26, 28 and a filter aperture 27.

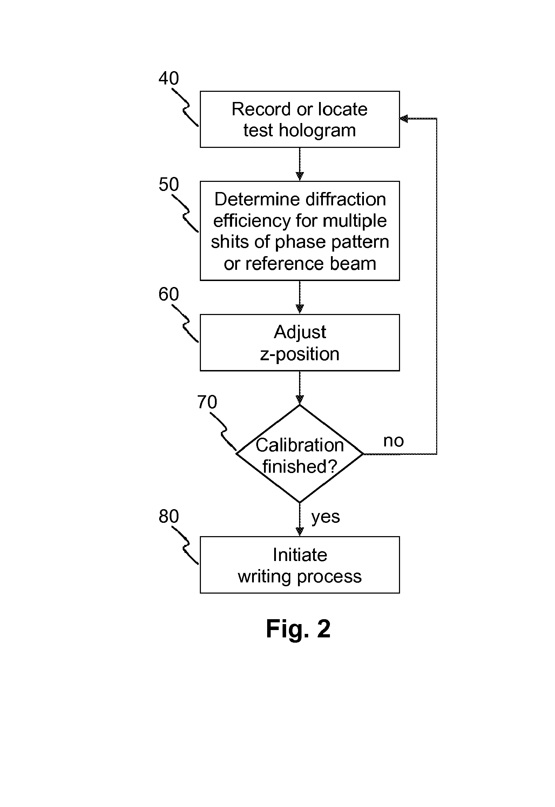

Before recording of data is initiated the correct z-position of the holographic storage medium 16 needs to be ensured. For this purpose the calibration method illustrated by the flow chart of Fig. 2 is performed. In a first step at least one test hologram is recorded 40 in the holographic storage medium 16 or an already recorded test hologram is located. Subsequently the dependency of the diffraction efficiency on a shift of the phase pattern or a shift of the reference beam 7 is determined 50 by retrieving the test hologram for multiple shifts of the phase pattern or the reference beam 7, respectively. The diffraction efficiency is preferably determined by analyzing the strength of the reconstructed object beam 25 on the array detector 29. Based on the determined dependency either the position of the holographic storage medium 16 is adjusted or both the first objective lens 15 and the second objective lens 24 are shifted 60. Both measures lead to an adjustment of the z-position. This procedure may be repeated if a checking step 70 yields that the resulting accuracy is not sufficient. Finally, after the adjustment procedure the main writing process is initiated 80. Of course, the calibration is not only useful before initiating 80 a writing process. It can likewise be performed before initiating a reading process.

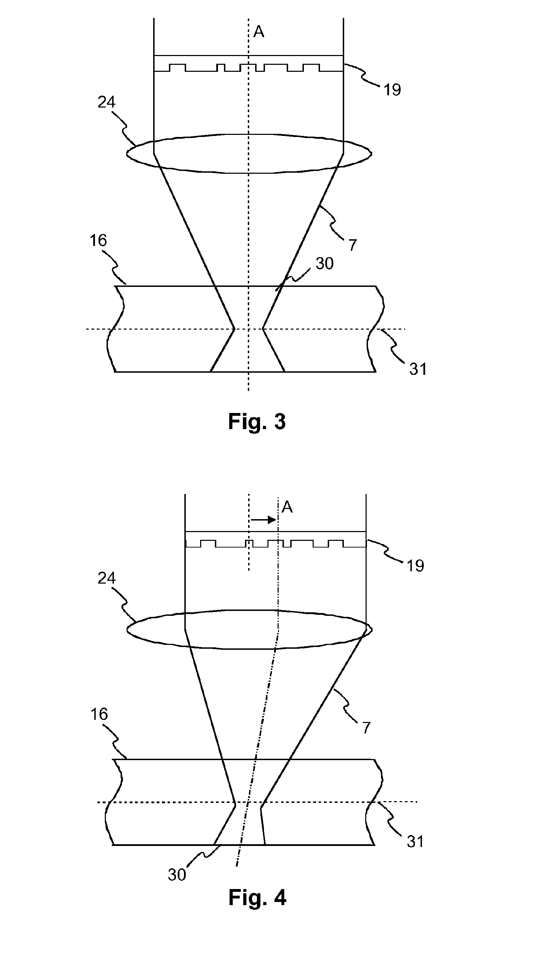

Fig. 3 depicts the hologram volume 30 inside the holographic storage medium 16, which is illuminated by the focused reference beam 7 after passing the phase mask 19. In this figure the optical axis A is perpendicular to the surface of the holographic storage medium 16. Usually the diameter of the phase mask is larger than the diameter of the reference beam 7. However, in Fig. 3 only limited parts of the reference beam 7 and the phase mask 19 are shown.

The situation in case of a shift of the phase mask 19 relative to the pupil of the second objective lens 24 is schematically illustrated in Fig. 4. As can be seen, the optical axis A is no longer perpendicular to the surface of the holographic storage medium 16. Therefore, the reference wavefront does not fit to the recorded hologram and, in addition, some parts of the hologram volume 30 inside the holographic storage medium 16 are not illuminated by the focused reference beam 7. This leads to a weaker reconstructed hologram. The limited part of the phase mask 19 of Fig. 3 is shifted into a different part of the reference beam 7. As only that part of the reference beam 7 passing through the limited part of the phase mask 19 is depicted in Fig. 4, this leads to the impression that the reference beam 7 is shifted relative to the second objective lens 24. This is, however, not the case, the position of the whole reference beam 7 does not change. Of course, as an alternative to shifting the phase mask (or the phase pattern in case of an optical element with switchable phase cells) it is likewise possible to shift the reference beam 7 relative to the second objective lens 24. Also in this case the reference wavefront does no longer fit to the recorded hologram.

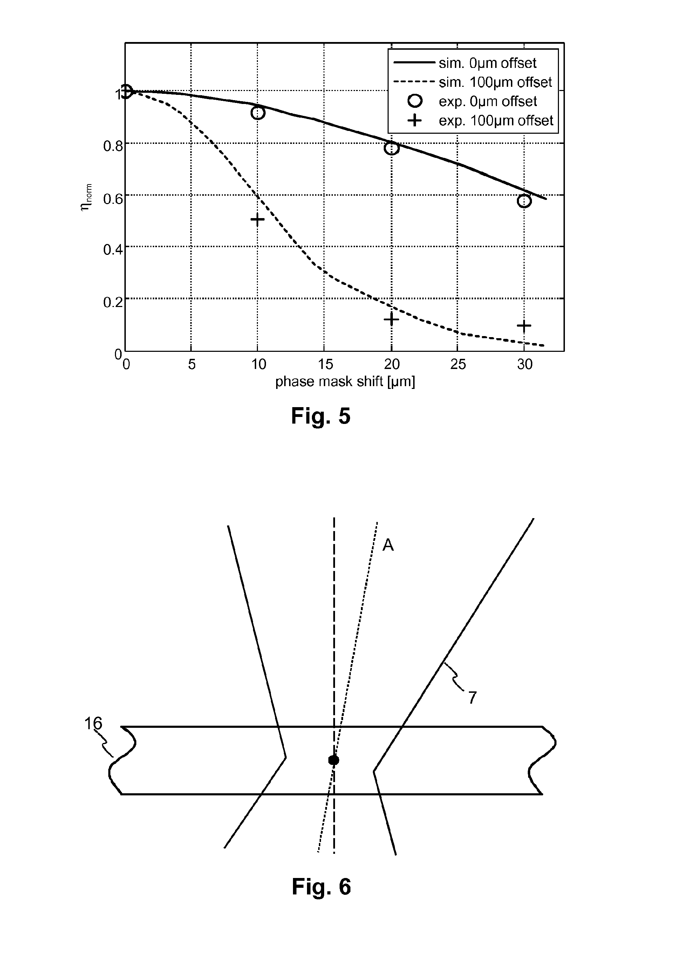

Fig. 5 shows simulated and experimental results for the dependency of the normalized diffraction efficiency $\eta_{norm}$ on the shift of the phase mask 19 for an offset of the holographic storage medium 16 of $0\mu m$ and $100\mu m$ from the correct z-position.

The diffraction efficiency is normalized by the diffraction efficiency of a hologram with zero shift. The simulations and experiments are based on a wavelength of 405nm, a numerical aperture of 0.6 and a thickness of the holographic storage medium 16 of $100\mu m$. As can be seen, the dependency of the normalized diffraction efficiency $\eta_{norm}$ on the shift of the phase mask 19 depends on the offset of the holographic storage medium 16. This dependency can thus be used for the calibration procedure of Fig. 2.

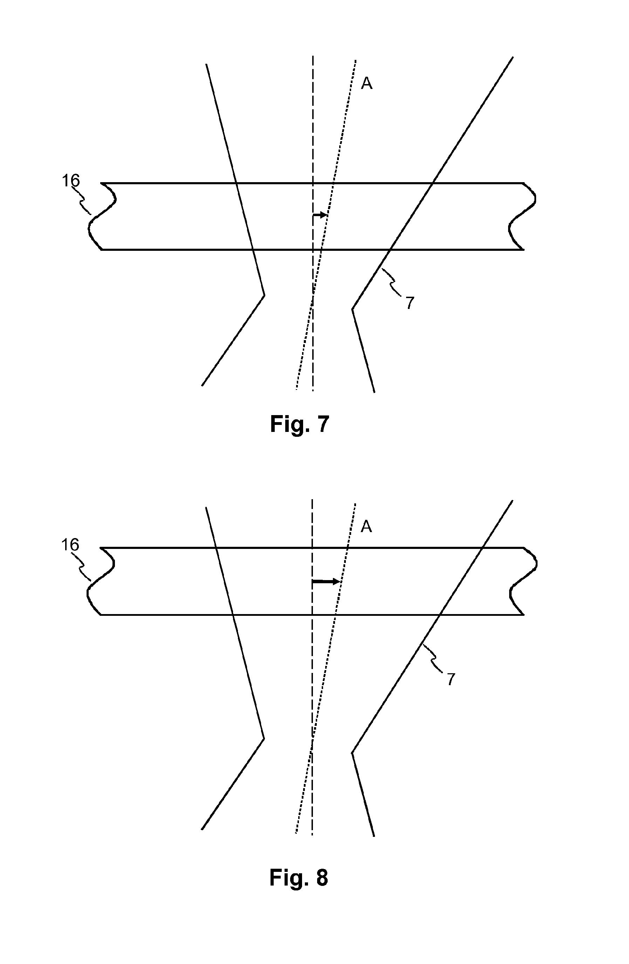

As described above a shift of the phase pattern in the image plane causes a tilt of the wavefront in the focal plane. This tilt of the wavefront reduces the diffraction efficiency during readout. As shown in Figs. 6 to 8, the relation of diffraction efficiency reduction and phase pattern shift depends on the alignment of the holographic storage medium 16 in z-direction. Fig. 6 shows the situation of a correctly positioned holographic storage medium 16. Fig. 7 depicts the situation of a small z-offset, Fig. 8 the situation of a large z-offset. The translation vector of the wavefront, which is indicated by the black circle in Fig. 6 (no translation) and the horizontal arrows in Figs. 7 and 8, increases with the z-offset. Since the read-out efficiency depends on the lateral offset because of the shift-selectivity of the setup, the total diffraction efficiency of the read-out hologram decreases for a given shift of the phase pattern with increasing z-offset. Consequently, the larger the z-offset of the holographic storage medium the stronger is the dependency on the phase pattern shift. In other words, a minimal dependency of the diffraction efficiency on the phase pattern shift directly corresponds to the correct adjustment of the holographic storage medium 16.

**Claims**

1.    Method for calibrating the position of a holographic storage medium (16) in the direction of an optical axis (A) in an apparatus (1) for reading from and/or writing to holographic storage media (16), **having** the steps of:

    - recording or locating (40) a test hologram in the holographic storage medium (16);
    - determining (50) the dependency of the diffraction efficiency of the test hologram on a shift of a reference beam wavefront relative to the recorded hologram; and
    - adjusting (60) the position of the holographic storage medium (16) responsive to the determined dependency.

2.    Method according to claim 1, **wherein** the reference beam wavefront is shifted relative to the test hologram by laterally shifting the reference beam (7) relative to an objective lens (24) for focusing the reference beam (7) into the holographic storage medium (16).

3. Method according to claim 1, **wherein** the reference beam wavefront is shifted relative to the test hologram by laterally shifting a phase pattern imprinted on the reference beam (7).

4. Method according to claim 3, **wherein** the phase pattern is laterally shifted by moving a phase mask (19) or a spatial light modulator (11) for imprinting the phase pattern on the reference beam (7).

5. Method according to claim 3, **wherein** the phase pattern is laterally shifted by shifting a phase pattern on a spatial light modulator (11) for imprinting the phase pattern on the reference beam (7).

6. Apparatus (1) for reading from and/or writing to a holographic storage medium (16), with a reference beam (7) for retrieving a hologram recorded in the holographic storage medium (16), **characterized in that** the apparatus (1) is adapted to perform the steps of:

   - recording or locating (40) a test hologram in the holographic storage medium (16);
   - determining (50) the dependency of the diffraction efficiency of the test hologram on a shift of a reference beam wavefront relative to the recorded hologram; and
   - adjusting (60) the position of the holographic storage medium (16) responsive to the determined dependency.

7. Apparatus (1) according to claim 6, **having** an actuator for laterally shifting the reference beam (7) relative to an objective lens (24) for focusing the reference beam (7) into the holographic storage medium (16).

8. Apparatus (1) according to claim 6, **having** means for laterally shifting a phase pattern imprinted on the reference beam (7).

9. Apparatus (1) according to claim 8, **wherein** the means for laterally shifting the phase pattern is an actuator (32) for laterally moving a phase mask (19) or a spatial light modulator (11) for imprinting the phase pattern on the reference beam (7).

10. Apparatus (1) according to claim 9, **wherein** the actuator (32) includes one of a Piezo- or motor-driven translation stage and a voice coil actuator.

11. Apparatus (1) according to claim 8, **wherein** the means for laterally shifting the phase pattern is a phase pattern controller for controlling a phase pattern on a spatial light modulator (11) for imprinting the phase pattern on the reference beam (7).

12. Apparatus (1) according to one of claims 6 to 11, **wherein** the diffraction efficiency is determined by analyzing the strength of a reconstructed object beam (25) on an array detector (29).

13. Apparatus (1) according to one of claims 6 to 12, **having** an actuator (34) for adjusting the position of the holographic storage medium (16) or the position of one or more objective lenses (15, 24) for focusing the reference beam (7) and/or an object beam (6) into the holographic storage medium (16).

**Fig. 1**

40

Record or locate
test hologram

50

Determine diffraction
efficiency for multiple
shits of phase pattern
or reference beam

60

Adjust
z-position

70

Calibration
finished?                no

80                       yes

Initiate
writing process

**Fig. 2**

**Fig. 3**

**Fig. 4**

**Fig. 5**

**Fig. 6**

**Fig. 7**

**Fig. 8**

Europäisches
Patentamt

European
Patent Office

Office européen
des brevets

## EUROPEAN SEARCH REPORT

Application Number

EP 09 30 5757

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2003/039000 A1 (TANAKA SATORU [JP] ET AL) 27 February 2003 (2003-02-27) * paragraphs [0064], [0069]; figures 3-5,6A * ----- | 1-13 | INV.<br>G11B7/085<br>G11B7/007<br>G11B7/08 |
| A | US 2009/080318 A1 (TATSUTA SHINICHI [JP] ET AL) 26 March 2009 (2009-03-26) * paragraph [0070] - paragraph [0073]; figures 2,3 * ----- | 1-13 | |
| A | JP 2008 097701 A (SONY CORP) 24 April 2008 (2008-04-24) * the whole document * ----- | 1-13 | |
| A | JP 2006 302328 A (SONY CORP) 2 November 2006 (2006-11-02) * abstract * ----- | 1-13 | |
| | | | TECHNICAL FIELDS SEARCHED (IPC)<br><br>G11B<br>G03H<br>G11C |

The present search report has been drawn up for all claims

| Place of search | Date of completion of the search | Examiner |
|---|---|---|
| Munich | 13 November 2009 | Chaumeron, Bernard |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 09 30 5757

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2009

| Patent document cited in search report | | Publication date | Patent family member(s) | | Publication date |
|---|---|---|---|---|---|
| US 2003039000 | A1 | 27-02-2003 | NONE | | |
| US 2009080318 | A1 | 26-03-2009 | CN | 101425300 A | 06-05-2009 |
| | | | JP | 2009080906 A | 16-04-2009 |
| JP 2008097701 | A | 24-04-2008 | NONE | | |
| JP 2006302328 | A | 02-11-2006 | NONE | | |

EPO FORM P0459

For more details about this annex : see Official Journal of the European Patent Office, No. 12/82

**EP 2 290 646 A1**

REFERENCES CITED IN THE DESCRIPTION

**Patent documents cited in the description**

- EP 2028653 A